# EUROPEAN PATENT SPECIFICATION

(11) **EP 2 570 520 B1**
(45) Date of publication and mention of the grant of the patent: **22.11.2017**
(21) Application number: 12184105.0
(22) Date of filing: 12.09.2012
(51) Int. Cl.: C25F 1/02

(54) **Method of rejuvenating a multilayer structure**
Verfahren zur Regenerierung einer Mehrschichtstruktur
Procédé de régénération d'une structure multicouche

(30) Priority: 15.09.2011 IN CH31792011
(43) Date of publication of application: 20.03.2013
(73) Proprietor: General Electric Company, Schenectady, NY 12345 (US)
(72) Inventor: Gourishankar, Karthick Vilapakkam, 560066 Bangalore, Karnataka (IN); Saha, Atanu, 560066 Bangalore, Karnataka (IN); Seshadri, Hari Nadathur, 560066 Bangalore, Karnataka (IN)
(74) Representative: Pöpper, Evamaria

(56) References cited:
- EP-A2- 1 354 977
- JP-A- 2004 185 998
- US-A1- 2003 157 361

## Description

### BACKGROUND

The invention relates generally to a method of rejuvenating a multilayer structure comprising a protective layer.

Various types of metals are used as components of systems which may be exposed to a high-temperature environment, for example components of a gas turbine engine. Typically, high operating temperatures for systems such as gas turbines are sought in order to increase their efficiency, thereby, exposing the components to operating conditions which can be thermally and chemically severe. As the operating temperatures increase, the durability of the metal components making up the system must correspondingly increase.

A variety of approaches have been used to raise the operating temperature at which the metal components can be used. Significant advances in high-temperature capabilities of the components have been achieved through the formulation of nickel- and cobalt-base superalloys. However, when used to form high-temperature components, e.g., the combustor and augmenter sections of a gas turbine engine, such alloys alone are often susceptible to damage by oxidation and hot corrosion attack, and may not retain adequate mechanical properties.

One approach for protecting the components involves the use of protective coatings. In many instances, the coatings are ceramic-based, and are referred to as thermal barrier coatings or "TBCs". The ceramic coatings are sometimes applied over a metallic bond coat, to form a "TBC system". Though significant advances have been made with coating materials and processes for producing both environmentally-resistant coatings and thermal-insulating ceramic coatings, the service life of a protective coating is typically limited by a spallation event, brought on by thermal fatigue. Circumstances can therefore arise where one or more of the protective coating layers must be replaced. In addition, when the component is exposed to an oxidizing atmosphere for an extended period of time, a thermally grown oxide (TGO) layer may form over a metallic protective coating, usually as a result of oxidation of the metallic coating. In many situations (though not all situations), the presence of the TGO layer is undesirable because it can adversely affect the service life of the component. This is especially true when the particular metal component is used at the elevated temperatures described above.

Conventional methods to repair or replace damaged protective coatings are labor-intensive and expensive, and can be difficult to perform on components with complex geometries, such as airfoils and shrouds. The repair process can be especially expensive if the component has to be removed from an engine, for example.

Accordingly, there is a need for a method that could be performed on localized areas of a protective coating, without removal of the component from the engine or other device, so that downtime and the need for excessive scrap material is minimized.

### BRIEF DESCRIPTION

One aspect of the present invention provides a non-destructive method of rejuvenating a protective layer applied over a substrate. The method includes the step of electrochemically reducing a thermally grown oxide layer situated over the substrate, under electrochemical conditions sufficient to minimize or eliminate the thermally grown oxide layer.

According to another aspect, the present invention provides a non-destructive method of rejuvenating a thermal barrier coating system applied over a substrate, wherein the coating system comprises an overlying ceramic layer disposed on a metallic protective layer. The method includes the step of electrochemically reducing a thermally grown oxide layer that is situated between the metallic protective layer and the ceramic layer.

Another aspect of the present invention provides a non-destructive method of rejuvenating a metallic interconnect layer of an electrochemical cell. The method includes the step of electrochemically reducing a thermally grown oxide layer situated between a cathode layer and the metallic interconnect layer, under electrochemical conditions sufficient to minimize or eliminate the thermally grown oxide layer.

### BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:
Fig. 1 is a schematic illustration of an apparatus for carrying out a non-destructive method for rejuvenating a protective layer, in accordance with one aspect of the invention.
Fig. 2 is a schematic illustration of an apparatus for carrying out a non-destructive method for rejuvenating another type of protective layer system, in accordance with one aspect of the invention.
FIG. 3 is a schematic illustration of an apparatus for carrying out a non-destructive method for rejuvenating a protective layer, in accordance with another aspect of the invention.
Fig. 4 is a schematic illustration of an apparatus for carrying out a non-destructive method for rejuvenating a metallic interconnect layer of an electrochemical cell, in accordance with one aspect of the invention.

### DETAILED DESCRIPTION

While only certain features of the invention have been illustrated and described herein, many modifications and changes will occur to those skilled in the art. It is, therefore, to be understood that the appended claims are intended to cover all such modifications and changes. In the specification and claims, reference will be made to a number of terms, which have the following meanings.

The singular forms "a", "an" and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be".

"Optional" or "optionally" means that the subsequently described event or circumstance may or may not occur, and that the description includes instances where the event occurs and instances where it does not.

It is also understood that terms such as "top," "bottom," "outward," "inward," are words of convenience and are not to be construed as limiting terms. Furthermore, whenever a particular feature of the invention is said to comprise or consist of at least one of a number of elements of a group and combinations thereof, it is understood that the feature may comprise or consist of any of the elements of the group, either individually or in combination with any of the other elements of that group.

As noted, in one embodiment, the present invention provides a non-destructive method of rejuvenating a protective layer applied over a substrate. The method includes the step of electrochemically reducing a thermally grown oxide layer situated over the substrate (and usually over the protective layer), under electrochemical conditions sufficient to minimize or eliminate the thermally grown oxide layer. As used herein, the term "multilayer structure" refers to systems that may for example include a protective coating structure, e.g., for thermal protection. The term may also refer to other metal structures in which TGO layers may form, e.g., an interconnect layer in an electrochemical cell, such as a fuel cell. Rejuvenation of the protective layer (e.g., a bond coat between a substrate and a TBC in the coating application) is usually very effective in rejuvenating the overall multilayer structure, since the protective layer can be critical to the integrity of the overall coating system.

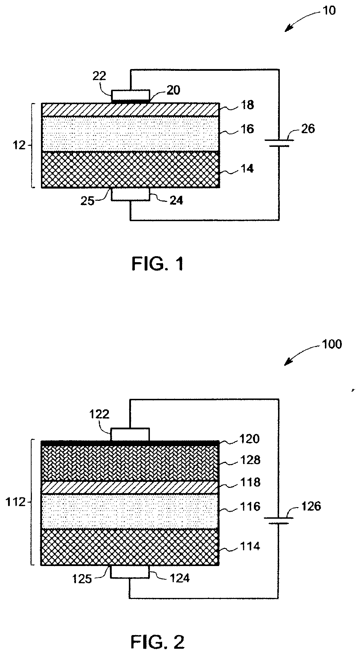

Fig. 1 shows one exemplary apparatus for rejuvenating a metallic protective layer 16 in a multilayer structure 12, according to one embodiment of the present invention. The multilayer structure 12 includes a metallic protective layer 16 disposed on a substrate 14. (The substrate is also usually formed of a metallic material). A thermally grown oxide layer 18 is disposed on the substrate 14, and is usually the undesirable result of temperature-induced oxidation.

The thickness of the thermally grown oxide layer 18 depends on the service conditions, such as operating temperature and time. When the thickness of the thermally grown oxide layer 18 exceeds a predetermined threshold, the protective coating system may need to be repaired and /or replaced. In one embodiment, when the thickness of the thermally grown oxide layer 18 is greater than about 5 micrometers, coating repair may be required. Frequently, the thermally grown oxide layer 18 has a thickness in a range from about 1 micrometer to about 5 micrometers. (In some cases; it may be desirable to eliminate or reduce the TGO layer when the thickness is less than 5 micrometers as well).

Typically the substrate 14 can be formed from a variety of metals or metal alloys. In some embodiments, the material of the substrate 14 may usually include some non-metallic components. As used herein, the term "non-metallic" usually refers to materials like ceramics, synthetic materials (e.g., polymers), or intermediate phases. In yet another embodiment, the substrate 14 comprises a superalloy. The term "superalloy", as used herein, refers to a metal complex such as those of cobalt-, nickel-, or iron-base alloys, which may include one or more other elements, such as aluminum, tungsten, molybdenum, and titanium. In one embodiment, the substrate 14 is heat resistant, i.e. having an operating temperature of at least about 1000-1150° C.

Nickel-base superalloys typically include at least about 40 weight percent nickel. Cobalt-base superalloys typically include at least about 30 weight percent cobalt. Moreover, the actual configuration of a substrate 14 may vary, depending on the component for which it is used. For example, the substrate 14 may be employed as a component of a turbine engine, e.g., combustor liners, combustor domes, shrouds, buckets, blades, nozzles, or guide vanes. As another example, the substrate 14 may take the form of a piston head of a diesel engine, or any other component requiring a heat-resistant coating. In other instances described below, the substrate may be part of the structure of an electrochemical cell. In some instances, the thickness of the substrate 14 can be quite small, for example, less than about 0.25 cm. Thermal protection of thin-walled superalloy components is often a critical task. In one embodiment, the substrate 14 is a nickel based superalloy.

At least one metallic protective layer 16 may be applied on the substrate 14. In some embodiments, the protective layer 16 may be directly applied over the substrate 14. In other embodiments, the protective layer 16 may be coupled to the substrate 14 via an intervening layer. In one embodiment, the intervening layer may be a diffusion barrier layer (not shown).

Usually, the metallic protective layer material is selected from the group consisting of a nickel aluminide material, a platinum aluminide material, a platinum-nickel-aluminide material, or a material having the formula MCrAl(X), wherein M is an element selected from the group consisting of Ni, Co, Fe, and combinations thereof; and "X" is an element selected from the group consisting of Y, Ta, Si, Hf, Ti, Zr, B, C, and combinations thereof. In some embodiments for the MCrAl(X) protective layers, chromium is present in a range from about 17 weight percent to about 23% weight percent; aluminum is present in a range from about 4 weight percent to about 13 weight percent; yttrium is present in a range from about 0.1 weight percent to about 2 weight percent; and M constitutes the balance. In another embodiment, the metallic protective layer 16 may include at least one material selected from the group consisting of chromium carbide, and cobalt-molybdenum-chromium-silicon.

In some embodiments, a metallic protective layer 16 may, by itself, provides some degree of corrosion protection and oxidation protection to the substrate 14. The metallic protective layer 16 may be applied by a variety of conventional techniques. Non-limiting examples include plasma spray or thermal spray techniques, e.g., high velocity oxygen fuel (HVOF), wire spray, CVD (chemical vapor deposition), or combinations thereof.

Referring again to Fig. 1, the apparatus 10 is depicted, for carrying out the non-destructive method for rejuvenating a multilayer structure 12. The apparatus includes the multilayer structure 12 described above (i.e., a workpiece), along with a system for carrying out the electrochemical reduction. The system includes means to apply a potential 26 across the multilayer structure 12. As illustrated in Fig. 1, the potential 26 can be applied via a first electrode 22 attached to the protective layer 16, through TGO layer 18; and a second electrode 24 attached to a surface of the substrate 14 (usually the bottom surface), to provide an electrochemical connection.

As described previously, the thermally grown oxide layer (TGO) 18 is formed on the metallic protective layer 16, and can be detrimental to the integrity of the overall protective coating. In this method, the thermally grown oxide layer 18 is chemically reduced, thereby reverting back to its metallic state. (Unless otherwise specified here, the term "reducing" refers to chemical reduction (i.e., electrochemical reduction), as compared to actually reducing the thickness of a layer.) However, the chemical reduction of the layer leads to its "physical" reduction in thickness. In some embodiments, the thickness of the TGO layer is reduced by about 20% to about 100% of its original thickness. In some specific embodiments, the TGO layer is substantially eliminated, after the electrochemical reduction.

In one embodiment, the electrochemical reducing step is carried out by applying an external potential 26 across the structure 12. The external voltage applied may vary, depending on a number of factors, but is usually in a range from about 0.5 Volt to about 20 Volts. In another embodiment, the external voltage applied is in a range from about 2 Volts to about 10 Volts

In an exemplary embodiment as shown in Fig. 1, the method includes an attachment of a first electrode 22 to an electrically conductive material 20 disposed on thermally grown oxide layer 18, to provide electrochemical connection. In one embodiment, the electrically conductive material 20 may include a layer of a metal such as gold, silver, platinum, or a metal alloy containing one or more of those materials. In other embodiments, the conductive material may comprise a modified ceramic material. The modified ceramic material may, for example, be an electrically-conductive ceramic material, such as doped tin oxide, and lithium iron oxide. The selected material should be one that does not contaminate the metallic protective layer 16 (which may contact the electrode when the thermally grown oxide layer 18 is removed). The selected material should also be one which can be readily detached from the metallic protective layer 16, after the process is complete (e.g., in those instances where TGO layer 18 is completely removed). Typically, the electrically conductive material 20 may be disposed on the metallic protective layer 16 in the form of connection bumps, spots, a contact layer, or a pressure contact. Those skilled in the art are familiar with conventional techniques for applying such materials.

The method further includes an attachment of a second electrode 24 to a surface 25 of the substrate 14, to provide electrochemical connection through the substrate 14. In one embodiment, the second electrode 24 is in contact with a bottom surface of the substrate 14, i.e., a surface opposite the surface contacting the metallic protective layer 16.

Typically, the first electrode 22 includes a first sample contact surface that is configured to be positioned in contact with the thermally grown oxide layer 18 of the multilayer structure 12. Similarly, the second electrode 24 includes a second sample contact surface that is configured to be positioned in contact with an underlying surface 25 of substrate 14. In some embodiments, the first sample contact surface has a shape corresponding to the shape of the metallic protective layer 16 of the multilayer structure 12. Further, a second sample contact surface may have a shape corresponding to the shape of substrate 14 of the multilayer structure 12.

As illustrated in Fig. 1, the metallic protective layer 16 and the substrate 14 are usually flat. Accordingly, first sample contact surface and second sample contact surface can also be flat. However, the shape of the first sample contact surface and/or the second sample contact surface may be flat, curved, curvilinear, angular, concave, convex, and/or any other form corresponding to (e.g., complementary to) the multilayer structure 12 surfaces i.e. the metallic protective layer 16 and the substrate 14. Shaping sample contact surfaces to correspond to multilayer structure 12 facilitates increasing the contact area and/or the electrical conductance between electrodes 22, 24 and multilayer structure 12.

In preferred embodiments, the method further includes the step of heating the metallic protective layer 16 and the substrate 14, under temperature conditions sufficient to cause diffusion of the oxide ions at a desired diffusion rate. In one embodiment, the heating may be carried out at specific locations on substrate 14 and/or on layer 16. In another embodiment, the heating may be carried out across the multilayer structure 12, i.e., through its bulk. In an exemplary embodiment, the metallic protective layer 16 and the substrate 14 may be heated to a temperature of at least about 250 °C. In another embodiment, the heating may be carried at a temperature in a range from about 250°C to about 800°C. In yet another embodiment, heating may be carried at a temperature in a range from about 300°C to about 500°C.

The electrochemical reduction step may be carried out under conditions that enhance the overall electrode kinetics, thereby reducing the over-potential required. In one embodiment, the electrochemical reduction step may be carried out in an inert atmosphere. The electrochemical reduction step may be carried out in a sweep of an inert gas such as xenon, helium, argon etc. In another embodiment, the electrochemical reduction step may be carried out in vacuum. In yet another embodiment, the electrochemical reduction step may be carried out at a partial pressure of oxygen of less than about 10⁻² atmospheres.

Referring to Fig. 2, another illustrative apparatus 100 for carrying out the non-destructive method is depicted, for rejuvenating a multilayer structure 112. In this instance, the multilayer structure 112 includes a metallic protective layer 116, disposed on a metallic substrate 114. A ceramic layer 128 is disposed over the metallic protective layer 116. A thermally grown oxide layer 118 is situated between the ceramic layer 128 and the metallic protective layer 116. (As described previously, the TGO layer is usually formed after exposure of the coating system to an oxidizing atmosphere for an extended period of time, and can be problematic). The method includes the step of electrochemically reducing the thermally grown oxide layer by applying a potential 126 across the multilayer structure 112, while substantially preventing the reduction of the ceramic layer 128. As illustrated in Fig 2, the potential 126 can be applied via a first electrode 122, attached to the ceramic layer 128 through layer 120, and a second electrode 124, attached to a surface 125 of the substrate 114, to provide electrochemical connection. In the illustrated embodiment, the electrode 122 may be attached through an electrically conductive material 120 disposed on the ceramic layer 128, to ensure an electrochemical connection.

The ceramic layer 128 that is disposed over the metallic protective layer 116, serving as a thermal barrier coating, typically comprises at least one material selected from the group consisting of zirconia, alumina, titania, yittria, ceria, europia, gadolinia, ytterbium oxide, hafnia, magnesia, silica, and combinations thereof. The choice of the material for the ceramic layer 128 would depend on the end use requirements for an article comprising the multilayer structure 112. In one embodiment, the ceramic layer 128 may contain at least about 70 weight percent of zirconia. In one embodiment, the zirconia is chemically stabilized by being blended with a material such as yttrium oxide, calcium oxide, magnesium oxide, cerium oxide, scandium oxide, or mixtures of any of those materials. In another embodiment, yttria-stabilized zirconia is the preferred ceramic material.

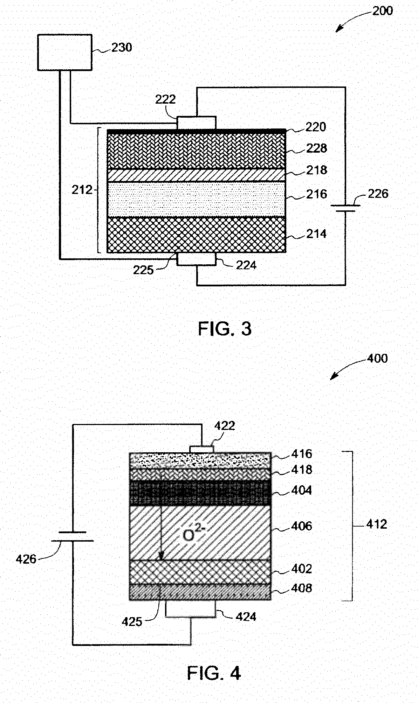

Fig. 3 depicts another apparatus 200 for carrying out the non-destructive method, according to some embodiments. A multilayer structure 212 includes a metallic protective layer 216 disposed on a metallic substrate 214. A ceramic layer 228 is disposed on the metallic protective layer 216. A thermally grown oxide layer 218 is situated between the ceramic layer 228 and the metallic protective layer 216. A measurement device 230 (as described below) is electrically coupled to the first electrode 222 and the second electrode 224. As illustrated in Fig. 3, the first electrode 222 may be attached to an electrically conductive material 220 disposed as a layer on the ceramic layer 228, to provide an electrochemical connection. The method in this embodiment includes electrochemically reducing the thermally grown oxide layer 218 by applying a potential 226 across the multilayer structure 212, while substantially preventing the reduction of the ceramic layer 228.

However, in this embodiment, the measurement device 230 measures an electrical property between first electrode 222 and second electrode 224. In one embodiment, measurement device 230 measures an electrical impedance, often determined by electrochemical impedance spectroscopy (EIS). This type of measurement device 230 is described in the pending Patent Application, Serial No. 13/021328 filed February 04, 2011. In an exemplary embodiment, measurement device 230 applies an alternating current or voltage input signal between first electrode 222 through a first conductor (not shown), and applies a current or voltage signal to second electrode 224 through a second conductor (not shown), over a predetermined frequency range (e.g., 100 Hertz to 1 megahertz). The signal is produced by a power source, which may include, without limitation, a potentiostat.

As described in the US Patent Application Serial No. 13/021328, the thickness of the thermally grown oxide layer 218 can be determined, based at least in part on the measured electrical property (e.g. impedance, capacitance, or inductance). In exemplary embodiments, the thickness is determined, based on the measured electrical impedance, using a value for a pre-determined relationship between thickness and impedance. For example, the values of measured impedance and layer thickness corresponding to the sampling temperature can be plotted in a graph, and a function defining a best-fit line is calculated to express the relationship between layer thickness and impedance, as described in the US Patent Application Serial No. 13/021328. Accordingly, in exemplary embodiments, the relationship between layer thickness and the electrical property that corresponds to the structure being evaluated is determined, based on a structure that is similar to or representative of the evaluated structure, as described in the US Patent Application Serial No. 13/021328.

In another aspect the present invention, a non-destructive method of rejuvenating a metallic interconnect layer of an electrochemical cell is provided. The method includes the step of electrochemically reducing a thermally grown oxide layer situated between a cathode layer and the interconnect layer, under electrochemical conditions sufficient to minimize or eliminate the thermally grown oxide layer.

In one embodiment, the electrochemical cell is a fuel cell, such as a solid oxide fuel cell. An illustrative embodiment is set out in Fig. 4, wherein an apparatus 400 includes the electrode system described below, along with a metallic interconnect layer 416. Layer 416 forms part of an electrochemical cell 412, e.g., a fuel cell. The electrochemical cell 412 usually includes an anode layer 402, a cathode layer 404, and an electrolyte layer 406, disposed between the anode layer 402 and the cathode layer 404. In some embodiments, the anode layer 402 and the electrolyte layer 404 may form an anode electrolyte bi-layer. The electrochemical cell 412 usually includes an additional interconnect layer 408, in contact with a surface 425 of the anode layer 402.

Typically, the anode layer 402 may be made of many different types of material, such as noble metals, transition metals, cermets, ceramics and combinations thereof. Non-limiting examples of the anode layer 402 material include nickel, nickel alloy, cobalt, Ni-YSZ cermet, Cu-YSZ cermet, Ni-Ceria cermet, or combinations thereof. In certain embodiments, the anode layer 402 comprises a composite of more than one material.

In general (though not always), ceramic electrolytes are used as the electrolyte layer 406 for the fuel cells described herein. These ceramic electrolytes generally have an ionic conductivity of at least about 10⁻³ S/cm, at the operating temperature of the device, and also have sufficiently low electronic conductivity. Examples of suitable ceramic materials include, but are not limited to, various forms of zirconia, ceria, hafnia, bismuth oxide, lanthanum gallate, thoria, and various combinations of these ceramics. In certain embodiments, the ceramic electrolyte comprises a material selected from the group consisting of yttria-stabilized zirconia, rare-earth-oxide-stabilized zirconia, scandia-stabilized zirconia, rare-earth doped ceria, alkaline-earth doped ceria, rare-earth oxide stabilized bismuth oxide, and various combinations of these compounds. In one embodiment, the ceramic electrolyte comprises a thermally sprayed (e.g., APS) yttria-stabilized zirconia. One skilled in the art would know how to choose an appropriate anode layer 402 material and electrolyte layer 406 material, based on the requirements discussed herein.

Typically, the cathode layer 404 may be formed from conventional materials, such as a variety of electrically conductive (and in some cases ionically conductive) compounds. Usually (but not always), the cathode layer 404 comprises a strontium-containing composition. Non-limiting examples of cathode layer 404 materials include strontium doped LaMnO₃, strontium doped PrMnO₃, strontium doped lanthanum ferrites, strontium doped lanthanum cobaltites, strontium doped lanthanum cobaltite ferrites, strontium ferrite, SrFeCo_{0.5}Oₓ, SrCo_{0.8}Fe_{0.2}O_{3-δ}; La_{0.8}Sr_{0.2}Co_{0.8}Ni_{0.2}O_{3-δ}; La_{0.7}Sr_{0.3}Co_{0.8}Ni_{0.2}O_{3-δ}; and combinations thereof. Composites of these materials may also be used. In certain embodiments, the ionic conductor comprises a material selected from the group consisting of yttria-stabilized zirconia, rare-earth-oxide-stabilized zirconia, scandia-stabilized zirconia, rare-earth doped ceria, alkaline-earth doped ceria, rare-earth oxide stabilized bismuth oxide, and various combinations of these compounds.

The metallic interconnect layers 416, 408 generally comprise a metal or a cermet, wherein chromium is one of the elements of the composition. Along with Cr, there is usually present at least one other element selected from the group of Fe, C, Cu, Ni, Mn, Co, Ti, V, Mg, Li, Nb, W, and rare earth metals. A non-limiting example of an interconnect material includes a ferritic stainless steel material with at least about 13% of Cr.

In one embodiment, the electrochemical cell 412 may further include a barrier layer (not shown) disposed on the cathode layer 404. In another embodiment, the barrier layer may be disposed on the interconnect layer 416. Suitable barrier layer materials are selected based on several criteria, such as electrical conductivity, phase stability and suitable values for the coefficient of thermal expansion. In some embodiments, the barrier layer comprises manganese, iron, cobalt or a combination of two or more of these elements, with or without oxygen and doping elements. In general, the barrier layer functions to prevent or impede the migration of strontium and chromium across this layer, and may also assist in limiting the formation of a chromium oxide scale, by limiting the air access to the interconnect surface.

Typically, during operation, a thermally grown oxide layer 418 is formed at the interface of the cathode layer 404 and the interface layer 416. In one embodiment, the thermally grown oxide layer 418 formed is an electrically insulating layer, which thereby hinders the performance of the electrochemical cell 412. Referring to Fig. 4 the method includes electrochemically reducing the thermally grown oxide layer 418 by applying a potential 426 across the electrochemical cell 412 via a first electrode 422 and a second electrode 424, while substantially preventing the reduction of the cathode layer 404.

### EXAMPLE

The following examples illustrate methods and embodiments in accordance with the invention, and as such, should not be construed as imposing limitations upon the claims.

This example can be reviewed with general reference to Fig. 2, described above. An HX-TBC Class B coupon (1-inch diameter) was isothermally heat-treated in air for a duration of 160 hours at a temperature of 850°C. The treatment resulted in the formation of ∼ 2 µm thick thermally grown oxide layer 118 between the metallic protective layer 116 and the ceramic layer 128. The cathodic lead (negative electrode 124) from a low-voltage DC power source is connected to the ceramic layer 128 in the heat treated HX-TBC Class B coupon sample 112. The positive lead (positive electrode 122) from the power source is connected to the metallic substrate 114. The negative electrode 122 was contacted with the ceramic layer 128 using a contact layer of silver as an electrically conductive material 120, applied in a soft metal button configuration over the ceramic layer 128. A silver button was also employed to provide electrical contact to the substrate 114 and the second electrode 124, at substrate surface 125.

The sample 112 was heated to a temperature of 500°C in an atmosphere of argon in a glove box with an oxygen level less than about 1 ppm, and an H₂O level less than about 1 ppm. Following the heat treatment, a constant voltage of 3V was applied across the sample for a duration of 2 hours. At the end of the stipulated time, the thickness of a thermally grown oxide layer 118 formed at the interface of the ceramic layer 128 and the metallic protective layer 116 was measured, using the method as described in the US Patent Application Serial No. 13/021328.

It was observed that on application of an appropriate positive DC voltage 126, current was conducted via the positive electrode 124, through the substrate 114 and the metallic protective layer 116 to the metallic protective layer 116 /thermally grown oxide layer 118 interface. At the interface of the metallic protective layer 116 and the thermally grown oxide layer 118, the aluminum ions (Al³⁺ ions) formed from the Al₂O₃ present in the thermally grown oxide layer 118, were reduced to metallic aluminum (represented by equation 1.).

Al³⁺ + 3 e⁻ → Al (equation 1)

Further, on applying the external potential 126, oxide ions were released, and were found to diffuse through the ceramic layer 128, which is an oxide-ion conductor at high temperatures. At the negative electrode 122 the oxide ions were oxidized to oxygen gas at the ceramic layer 128 (represented by equation 2).

2 O²⁻ → O₂(g) + 4 e⁻ (equation 2)

A continuous sweep or purge of an inert gas was maintained to facilitate the removal of the oxygen gas thus formed.

The net reaction occurring can be represented by equation 3:

2 Al³⁺ + 3 O²⁻ → 2 Al + 3 O₂(g) (equation 3)

During the rejuvenation process, the thermally grown oxide layer 118 containing alumina (Al₂O₃) was continuously reduced to form aluminum. The aluminum formed diffused back into the metallic protective layer 116, while oxygen gas was continuously removed from the reaction site by the sweep/purge gas. The diffusion of the aluminum back into the metallic protective layer 116 resulted in the shrinkage or elimination of thermally grown oxide layer 118.

It may be noted that the impedance measured is found to be proportional to the thickness of the thermally grown oxide layer 118, as described in the US Patent Application Serial No. 13/021328. The as-coated sample (prior to heat treatment) showed a total resistance of ∼5,000 Ohms. After heat treatment of the sample at a temperature of 850°C for 160 hours, the measured impedance increased to about 30,000 Ohms, which may be attributed to the formation of the thermally grown oxide layer 118. On subjecting the heat-treated sample 112 to the above described non-destructive method of rejuvenation, the measured impendence was found to decrease to about 1200 Ohms (almost by a factor of 3), indicating that the thickness of the thermally grown oxide layer 118 has been reduced. The electrical impedance measurements were carried out at 400°C, using the electrochemical impedance spectroscopy and method, as described in the U.S. Patent Application Serial No. 13/021328.

While the invention has been described with reference to exemplary embodiments, it will be understood by those skilled in the art that various changes may be made, and equivalents may be substituted for elements thereof, without departing from the scope of the invention. In addition, many modifications may be made to adapt a particular situation or material to the teachings of the invention, without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A non-destructive method of rejuvenating a protective layer applied over a substrate, comprising the step of:
electrochemically reducing a thermally grown oxide layer situated over the substrate and the protective layer, under electrochemical conditions sufficient to minimize or eliminate the thermally grown oxide layer.

2. The method according to claim 1, wherein the electrochemical reduction step is carried out by applying an external voltage across the thermally grown oxide layer in a range of about 0.5 Volt to about 20 Volts.

3. The method according to claim 1 or claim 2, wherein the electrochemical reduction step further comprises the step of heating the protective layer and the substrate, under temperature conditions sufficient to cause diffusion of oxide ions from the thermally grown oxide layer, into the protective layer.

4. The method according to any preceding claim, comprising an attachment of a first electrode to an electrically conductive material disposed on the protective layer, to provide an electrochemical connection.

5. The method according to claim 4, comprising an attachment of a second electrode to another surface of the substrate, to provide an electrochemical connection.

6. The method according to any preceding claim, wherein the thermally grown oxide layer is reduced in thickness by about 20 percent to about 100 percent of the initial thickness of the layer prior to the electrochemical reduction.

7. The method according to claim 5, further comprising measuring an electrical impedance between the first electrode and the second electrode, using a measurement device electrically coupled to the first electrode and the second electrode, wherein the measurement of the impedance provides a measurement for the thickness of the thermally grown oxide layer.

8. The method according to any preceding claim, wherein the protective layer is metallic, and a ceramic layer is disposed on the protective layer.

9. A non-destructive method of rejuvenating a thermal barrier coating system applied over a substrate, wherein the coating system comprises an overlying ceramic layer disposed on a metallic protective layer, the method comprising the step of:
electrochemically reducing a thermally grown oxide layer that is situated between the metallic protective layer and the ceramic layer, under electrochemical conditions sufficient to minimize or eliminate the thermally grown oxide layer.

10. A non-destructive method of rejuvenating a metallic interconnect layer of an electrochemical cell, comprising the step of:
electrochemically reducing a thermally grown oxide layer situated between a cathode layer and the metallic interconnect layer, under electrochemical conditions sufficient to minimize or eliminate the thermally grown oxide layer.

## Patentansprüche

1. Ein zerstörungsfreies Verfahren zur Regenerierung einer Schutzschicht, die über einem Substrat aufgebracht ist, umfassend den Schritt:
elektrochemisches Reduzieren einer thermisch gewachsenen Oxidschicht, die sich über dem Substrat und der Schutzschicht befindet, unter ausreichenden elektrochemischen Bedingungen, um die thermisch gewachsene Oxidschicht zu minimieren oder zu eliminieren.

2. Das Verfahren nach Anspruch 1, wobei der elektrochemische Reduktionsschritt durchgeführt wird, indem eine externe Spannung in einem Bereich von etwa 0,5 Volt bis etwa 20 Volt über der thermisch gewachsenen Oxidschicht angelegt wird.

3. Das Verfahren nach Anspruch 1 oder Anspruch 2, wobei der elektrochemische Reduktionsschritt ferner den Schritt des Erwärmens der Schutzschicht und des Substrats unter ausreichenden Temperaturbedingungen umfasst, um Diffusion der Oxidionen aus der thermisch gewachsenen Oxidschicht in die Schutzschicht zu bewirken.

4. Das Verfahren nach einem der vorhergehenden Ansprüche, umfassend eine Befestigung einer ersten Elektrode an einem elektrisch leitfähigen Material, das auf der Schutzschicht angeordnet ist, um eine elektrochemische Verbindung herzustellen.

5. Das Verfahren nach Anspruch 4, umfassend eine Befestigung einer zweiten Elektrode an einer anderen Oberfläche des Substrats, um eine elektrochemische Verbindung bereitzustellen.

6. Das Verfahren nach einem der vorhergehenden Ansprüche, wobei die Dicke der thermisch gewachsenen Oxidschicht um etwa 20 Prozent bis etwa 100 Prozent der Anfangsdicke der Schicht vor der elektrochemischen Reduktion reduziert wird.

7. Das Verfahren nach Anspruch 5, ferner umfassend Messen einer elektrischen Impedanz zwischen der ersten Elektrode und der zweiten Elektrode unter Verwendung einer Messvorrichtung, die elektrisch an die erste Elektrode und die zweite Elektrode gekoppelt ist, wobei die Messung der Impedanz eine Messung der Dicke der thermisch gewachsenen Oxidschicht bereitstellt.

8. Das Verfahren nach einem der vorhergehenden Ansprüche, wobei die Schutzschicht metallisch ist und eine Keramikschicht auf der Schutzschicht angeordnet ist.

9. Ein zerstörungsfreies Verfahren zur Regenerierung eines Wärmebarrierebeschichtungssystems, das über einem Substrat aufgebracht ist, wobei das Beschichtungssystem eine darüber liegende Keramikschicht umfasst, die auf einer metallischen Schutzschicht angeordnet ist, wobei das Verfahren den Schritt umfasst:
elektrochemisches Reduzieren einer thermisch gewachsenen Oxidschicht, die sich zwischen der metallischen Schutzschicht und der Keramikschicht befindet, unter ausreichenden elektrochemischen Bedingungen, um die thermisch gewachsene Oxidschicht zu minimieren oder zu eliminieren.

10. Ein zerstörungsfreies Verfahren zur Regenerierung einer metallischen Zwischenverbindungsschicht einer elektrochemischen Zelle, umfassend den Schritt:
elektrochemisches Reduzieren einer thermisch gewachsenen Oxidschicht, die sich zwischen einer Kathodenschicht und der metallischen Zwischenverbindungssschicht befindet, unter ausreichenden elektrochemischen Bedingungen, um die thermisch gewachsene Oxidschicht zu minimieren oder zu eliminieren.

## Revendications

1. Procédé non destructif de régénération d'une couche protectrice appliquée sur un substrat, comprenant l'étape consistant à :
réduire électrochimiquement une couche d'oxyde accumulée thermiquement située sur le substrat et la couche protectrice, dans des conditions électrochimiques suffisantes pour minimiser ou supprimer la couche d'oxyde accumulée thermiquement.

2. Procédé selon la revendication 1, dans lequel l'étape de réduction électrochimique est réalisée en appliquant une tension externe à travers la couche d'oxyde accumulée thermiquement dans une gamme d'environ 0,5 volt à environ 20 volts.

3. Procédé selon la revendication 1 ou la revendication 2, dans lequel l'étape de réduction électrochimique comprend en outre l'étape consistant à chauffer la couche protectrice et le substrat, dans des conditions de température suffisantes pour provoquer la diffusion d'ions oxyde depuis la couche d'oxyde accumulée thermiquement jusqu'à l'intérieur de la couche protectrice.

4. Procédé selon une quelconque revendication précédente, comprenant une fixation d'une première électrode à un matériau électriquement conducteur disposé sur la couche protectrice, pour fournir une connexion électrochimique.

5. Procédé selon la revendication 4, comprenant une fixation d'une deuxième électrode à une autre surface du substrat, pour fournir une connexion électrochimique.

6. Procédé selon une quelconque revendication précédente, dans lequel l'épaisseur de la couche d'oxyde accumulée thermiquement est réduite d'environ 20 pour cent à environ 100 pour cent de l'épaisseur initiale de la couche avant la réduction électrochimique.

7. Procédé selon la revendication 5, comprenant en outre la mesure d'une impédance électrique entre la première électrode et la deuxième électrode, au moyen d'un dispositif de mesure couplé électriquement à la première électrode et la deuxième électrode, la mesure de l'impédance fournissant une mesure de l'épaisseur de la couche d'oxyde accumulée thermiquement.

8. Procédé selon une quelconque revendication précédente, dans lequel la couche protectrice est métallique, et une couche céramique est disposée sur la couche protectrice.

9. Procédé non destructif de régénération d'un système de revêtement de barrière thermique appliqué sur un substrat, le système de revêtement comprenant une couche céramique de recouvrement disposée sur une couche protectrice métallique, le procédé comprenant l'étape consistant à :
réduire électrochimiquement une couche d'oxyde accumulée thermiquement qui est située entre la couche protectrice métallique et la couche céramique, dans des conditions électrochimiques suffisantes pour minimiser ou supprimer la couche d'oxyde accumulée thermiquement.

10. Procédé non destructif de régénération d'une couche d'interconnexion métallique d'une pile électrochimique, comprenant l'étape consistant à :
réduire électrochimiquement une couche d'oxyde accumulée thermiquement située entre une couche cathodique et la couche d'interconnexion métallique, dans des conditions électrochimiques suffisantes pour minimiser ou supprimer la couche d'oxyde accumulée thermiquement.
